# EUROPEAN PATENT APPLICATION

(11) **EP 3 335 922 A1**
(43) Date of publication of application: **20.06.2018**
(21) Application number: 17204393.7
(22) Date of filing: 29.11.2017
(51) Int. Cl.: B60K 37/06

(54) **A USER CONTROL SYSTEM FOR A VEHICLE**

(30) Priority: 16.12.2016 GB 201621421
(71) Applicant: AGCO International GmbH, 8212 Neuhausen am Rheinfall (CH)
(72) Inventor: EHRL, Markus, 87616 Marktoberdorf (DE); VONROTH, Daniel, 87616 Marktoberdorf (DE); KEMMLER, Elmar, 87616 Marktoberdorf (DE)
(74) Representative: AGCO Intellectual Property Department

(57) **Abstract**

There is described a user control system for a vehicle, which allows for user control element to be assigned to control different vehicle functions. In the case of vehicle functions requiring a plurality of control inputs, e.g. a direction-related vehicle function, the control system provides indicator elements which highlight the link between individual control elements which have been assigned to control such multiple-input functions. The indicator elements are preferably provided as light-emitting elements positioned between adjacent control elements which illuminate to indicate the functional connection between controls.

## Description

### Field of the Invention

The present invention relates to a user control system for a vehicle, and a vehicle having such a control system.

### Background of the Invention

In agricultural or constructional vehicles, different vehicle functions are operated through the use of various controls provided in the vehicle cab. In addition, different implements which can be attached to the vehicle can provide an array of different implement functions, which can then be controlled from the cab using the appropriate controls.

As the number of possible vehicle functions has increased due to the increased complexity of modern vehicles, many agricultural vehicles now comprise programmable or assignable controls. Such controls can be assigned to control the operation of different functions of the vehicle, based on operator preference, or different selectable pre-defined control schemes. The vehicle controls generate electronic switching signals, which are interpreted by the vehicle electronic control unit (ECU) according to the assignment profile of the controls to ensure that the correct vehicle function is operated by the respective controls.

Due to the nature of the controlled functions, different types of controls are generally associated with different types of functions, to ease operator understanding. For example, rocker switches or cross-gate levers are generally used for the control of hydraulic valves; mini-joysticks or thumbsticks generally used for directional control of components; and pushbutton switches for any other vehicle functions.

However, the use of such different types of control elements in a vehicle cab, e.g. rocker switches, cross-gate levers, thumbsticks, can lead to an operator being constrained in the free assignment of vehicle functions to the vehicle controls. For example, an operator will not easily think to assign a cross-gate lever to control functions which are more effectively controlled by pushbutton switches. Similarly, an array of isolated pushbutton switches may not be intuitively used to control a directional vehicle function, such as that normally controlled by a thumbstick.

Due to the likelihood of confusion of the operator in such assignments, accordingly operators tend to just assign vehicle functions to those control elements which can easily be interpreted to apply to such functions. As a result, a vehicle cab will either need a greater selection of control elements of different types, thereby leading to increased costs for manufacture of the cab, or the operator will be required to assign functions to unintuitive vehicle controls within the cab.

Accordingly, it is an object of the invention to provide an assignable control system for a vehicle having increased flexibility, and which provides for greater ease of use for an operator.

### Summary of the Invention

Accordingly, there is provided a user control system for a vehicle having a plurality of controllable vehicle functions, at least some vehicle functions within the plurality requiring a number of functionally-linked inputs, the user control system comprising:
an array of assignable user control elements, wherein user control elements within the array can be assigned to control different vehicle functions, and
a plurality of indicator elements, wherein the indicator elements are arranged to display functional connections or links between a subset of user control elements within the array when the subset of user control elements are assigned to control functionally-linked inputs for the vehicle functions.

By providing indicators which are used to indicate links between assigned user controls, an operator can more easily interpret and understand the configuration of the assigned control elements. In addition, the control system provides greater flexibility, as operators can easily assign control of different types of vehicle functions to a common array of control elements, and can easily visualise the control operations provided by the assigned controls.

Preferably, the indicator elements are positioned between the user control elements of the array, wherein the indicator elements are arranged to display functional links between adjacent user control elements within the array.

Preferably, the indicator elements comprise illuminating elements, wherein when adjacent user control elements are assigned to control functionally-linked inputs for the vehicle functions, an indicator element extending between the adjacent control elements is illuminated to display the functional link between the user control elements.

The indicator elements may comprise lights, LEDs, LCDs.

Additionally or alternatively, the user control elements are provided with integral indicators, wherein the integral indicators are arranged to display links between functionally-linked control elements.

In this instance, the integral indicators may comprise colour-changing light elements, e.g. lights, LEDS, LCDs, wherein functionally-linked control elements are illuminated in common colours.

Additionally or alternatively, the integral indicators may comprise programmable display screens, the display screens arranged to display an indication of the controlled vehicle function.

Preferably, the array of assignable user control elements comprises an array of pushbutton switches. The user control elements may further comprise other types of controls, e.g. rocker switches, cross-gate levers, mini-joysticks, thumbsticks, rotary dials, etc.

Preferably, the user control system further comprises a user interface device, wherein user control elements can be assigned to control different vehicle functions using the user interface device.

The user interface device may comprise an operator terminal or touch-screen display.

Preferably, the user control system further comprises an electronic control unit (ECU) operable to control the operation of the indicator elements based on the assignment of the user control elements to control different vehicle functions.

There is further provided a vehicle, preferably an agricultural or constructional vehicle, further preferably an agricultural tractor or harvester, the vehicle having a plurality of controllable vehicle functions, the vehicle comprising a control system as described above.

Preferably, the vehicle comprises a control lever, wherein the user control system is provided on the control lever.

Preferably, the user control system is provided on a control panel arranged on the control lever. Further preferably, the position of the control panel is adjustable on the control lever.

### Detailed Description of the Invention

Embodiments of the invention will now be described, by way of example only, with reference to the accompanying drawings, in which:
Fig. 1 is a side view of an agricultural tractor having a user control system according to the invention;
Figs. 2A and 2B illustrate different embodiments of a control lever having a user control system according to the invention;
Fig. 3 is a plan view of an embodiment of control panel for a control system according to the invention;
Fig. 4 is a plan view of the control panel of Fig. 3, in a first example control configuration;
Fig. 5 is a plan view of the control panel of Fig. 3, in a second example control configuration;
Fig. 6 is a plan view of a further embodiment of control panel for a control system according to the invention, in an example control configuration; and
Fig. 7 illustrates an overview of a control system for a vehicle according to the invention.

The drawings are provided by way of reference only, and will be acknowledged as not to scale.

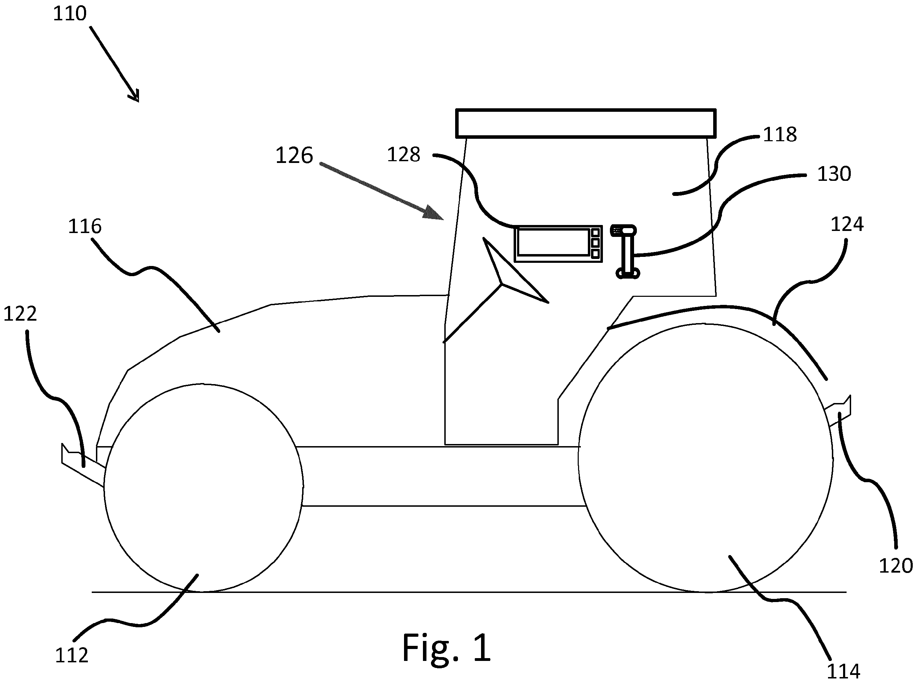

With reference to Fig. 1, a vehicle according to the invention in the form of an agricultural tractor is indicated at 110. The tractor 110 comprises front wheels 112 and rear wheels 114, a forward engine section 116 and a cab section 118. A rear linkage 120 is provided at the rear of the tractor 110, and a front linkage 122 is provided at the front of the tractor 110. The front and rear linkages 120,122 can be actuated or moved using associated hydraulic cylinders. Rear fenders 124 are provided to cover a portion of the rear wheels 114.

Within the cab 118, an operator station 126 is provided. The operator station 126 comprises a user interface device 128 which is used to display information relating to tractor operation, and to control different elements of the tractor 110. The operator station 126 is provided with a control lever 130, which can be used to operate different elements of the tractor 110, e.g. hydraulic circuits, lifting systems, and/or to control the acceleration and steering of the tractor 110. As part of the operator station 126, the tractor 110 is provided with a user control system which allows for greater ease of use and flexibility than prior art systems.

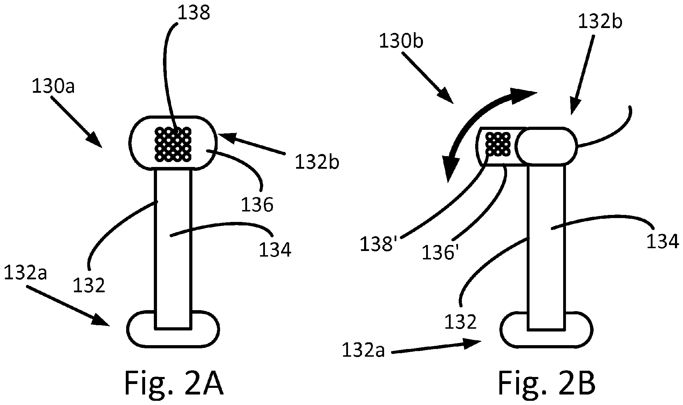

With reference to Figs. 2A and 2B, two embodiments of a control lever 130a, 130b having a control system according to the invention are illustrated.

In Fig. 2A, control lever 130a comprises a lever body 132 having a base end 132a and an upper end 132b. The lever body 132 has a gripping surface 134 for gripping by a hand of an operator. A control panel 136 is provided at the upper end 132b of the lever body 132. The control panel 136 comprises a plurality of user control elements 138 set out in an array. The user operating control elements 138 can be used to control different components of the tractor 110. The control elements 138 can be used to control actuation of different hydraulic or pneumatic systems, for example a lifting circuit for a front loader or a front or rear linkage 120,122. The control elements 138 may also be configured to control the operation of different implements or attachments coupled with the tractor 110, e.g. cultivation or application equipment such as ploughs, sprayers, etc. Additionally or alternatively, the control elements 138 can be used to control operation of different electronic or software-based subsystems of the tractor 110, e.g. a vehicle radio, a navigation system, a telephone interface, etc.

In Fig. 2B, the illustrated embodiment of control lever 130b comprises several features in common with the embodiment of Fig. 2A, with common features provided with the same reference numerals. In the embodiment of Fig. 2B, the control panel 136' is provided as a moveable element on the upper end 132b of the control lever 130b, such that the position of the control panel 138' can be adjusted about the lever body 132. The user control elements 138' provided on the control panel 136' may be reassigned based on the position of the control panel 136' on the lever body 132.

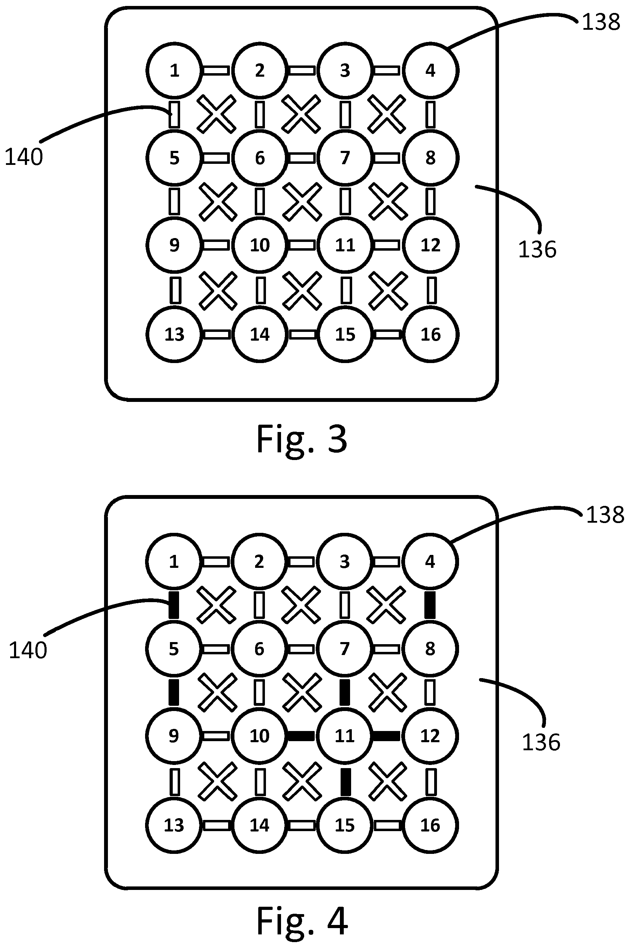

The control panel 136 of Fig. 2A is seen in an enlarged view in Fig. 3, showing the features of the control system according to the invention. The control panel 136 comprises an array of user control elements 138 in the form of pushbuttons arranged in a 4x4 grid, with individual control elements sequentially numbered 1-16. It will be understood that alternative arrangements or layouts of control elements 138 may be used, and that the user control elements 138 may additionally comprise other types of controls, e.g. rocker switches, cross-gate levers, mini-joysticks, thumbsticks, rotary dials, etc.

The user control elements 138 are provided as assignable control elements, wherein an individual control element 138 can be assigned to control the operation of any one of a number of vehicle functions, as described above. The assignment of the individual user control elements 138 to the different functions may be performed by a central control unit or by user input via the user interface device 128.

The control system of the control panel 136 further comprises a plurality of indicator elements 140 which are arranged between the control elements 138 of the control panel 136. The indicator elements 140 are provided as light-emitting elements which can be illuminated to indicate a functional connection between adjacent control elements 138. The indicator elements 140 may comprise lights, LEDs, LCDs, or any other suitable light-emitting device. The indicator elements 140 are arranged at the cardinal points around individual control elements 138, extending between adjacent control elements 138.

Fig. 4 shows a sample illumination map is provided for the control panel 136 of Fig. 3. In Fig. 4, pushbuttons 4 and 8 are assigned as a two-way control for a vehicle function, e.g. a forward/back or up/down control of an actuator. Accordingly, the indicator element 140 located between pushbuttons 4 and 8 is illuminated to demonstrate the functional link between the controls. Similarly, pushbuttons 1, 5 and 9 are assigned to the control of a three-way vehicle functions, such that the indicator elements 140 located between pushbuttons 1 & 5 and 4 & 8 are illuminated. The pushbuttons 7, 10, 11, 12 and 15 are assigned to the control of a four-way function, e.g. similar to that of a cross-gate lever or a thumbstick controller. As a result, the indicator elements 140 are illuminated to clearly show the cross-like control connection of the pushbuttons.

As a result of the indicator elements 140 being used to clearly indicate to a vehicle operator the functional links between assigned control elements 138, a control system is provided having improved ease of use and flexibility of assignment when compared with the prior art.

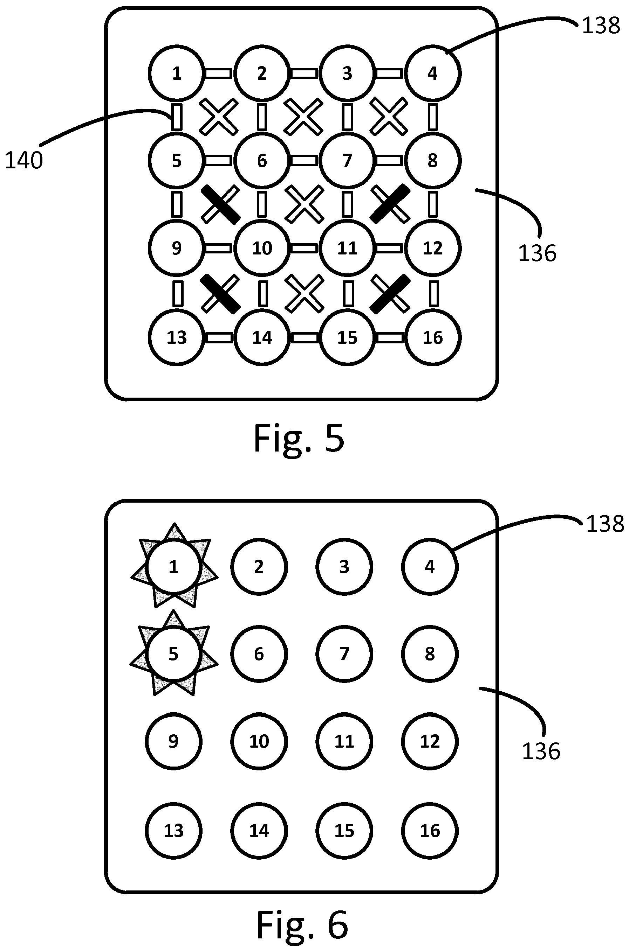

It will be understood that other assignments of user control elements may be provided. For example, in Fig. 5, the control elements 138 have been assigned to recreate the functionality of four rocker switches, which may be arranged at an angle. Accordingly, buttons 5 & 10, 8 & 11, 9 & 14 and 12 & 15 are functionally linked to provide the rocker switch inputs, with the result that the indicator elements 140 positioned diagonally between the pushbuttons in question are illuminated.

In the embodiment of Fig. 6, the control elements 138 are provided as illuminating switches, wherein control elements 138 which are functionally linked can be jointly illuminated. In the illustrated embodiment, pushbuttons 1 and 5 are assigned to a two-way control, and accordingly are illuminated in the same colour by integrated indicator elements in the form of lights, LEDs or LCDs. Such illuminating control elements 138 are preferably provided in addition to the plurality of indicator elements 140 described above, which are arranged between the user control elements 138. Additionally or alternatively, the control elements 138 may comprise integrated displays which demonstrate an indicator of the currently-assigned vehicle function, e.g. a forward/reverse or up/down movement, an increase/decrease in hydraulic flow, etc.

While the above embodiments describe the control system of the invention as part of a control panel 136 of a control lever 130, it will be understood that the user control elements 138 and associated indicator elements 140 may be provided as part of any control device for a vehicle, e.g. on a steering wheel, a user input terminal, an armrest control console, etc.

The control system of the invention is arranged to interface with a vehicle electronic control unit (ECU) to perform the re-assignment or re-configuration of the user control elements, and the illumination of the appropriate indicator elements 140.

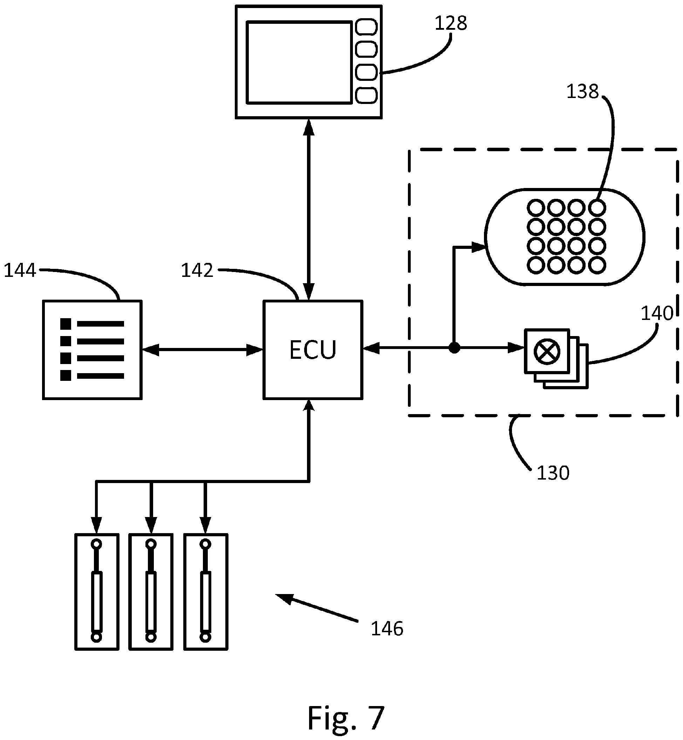

An overview of an embodiment of a control scheme for the control system of the invention is illustrated in Fig. 7. It will be understood that this overview is provided by way of example, and that individual embodiments may comprise different combinations of the illustrated features.

The components of the control lever 130 are indicated within the broken-line outline, but it will be understood that the control system may be provided as part of any other vehicle control device. The control lever 130 comprises an array of user control elements 138 as described above, and a plurality of indicator elements 140 in the form of light-emitting elements or lamps which can be illuminated as appropriate.

The control lever 130 and associated components are communicatively coupled with a vehicle ECU 142 provided in the vehicle, e.g. tractor 110, for the control and operation of the vehicle functions. The ECU 142 is coupled with a memory storage module 144, which can be accessed to retrieve stored data, e.g. stored layouts of configurations of user control elements 138 of the control lever 130, and associated illumination maps for the indicator elements 140. The ECU 142 is further coupled with the user interface device 128, for the input of commands from an operator as well as the display of information.

The ECU 142 is further coupled with a variety of individual vehicle functions, indicated generally at 146, for the control and operation of the vehicle functions 146. While the functions 146 are illustrated as hydraulic cylinders, it will be understood that the functions 146 to be controlled by the control lever may comprise any suitable vehicle system, e.g. steering, acceleration, navigation, implement control, etc.

As described above, the vehicle ECU 142 may be configured to perform the re-assignment of the user control elements 138 of the control lever 130 to the different vehicle functions 146, and the control of the illumination of the individual indicator elements 140 to illustrate the functional links between assigned control elements 138.

The user interface device 128 may be used by an operator to configure the assignment of the operating elements 138 of the control lever to different vehicle functions 146. For example, an operator can define different controller layouts to be used for the control elements 138 and the appropriate illumination map of indicator elements 140, wherein the controller layouts can be stored in the memory storage module 144 for later retrieval and use by the control lever 130.

The use of a control system having a assignable control elements, and indicators to illustrate the functional-links between assigned control elements, provides a control system which allows for improved ease of operator understanding, and a greater flexibility of assignment of vehicle functions.

The invention is not limited to the embodiments described herein, and may be modified or adapted without departing from the scope of the present invention.

## Claims

1. A user control system for a vehicle having a plurality of controllable vehicle functions, at least some vehicle functions within the plurality requiring a number of functionally-linked inputs, the user control system comprising:
an array of assignable user control elements, wherein user control elements within the array can be assigned to control different vehicle functions, and
a plurality of indicator elements, wherein the indicator elements are arranged to display functional connections or links between a subset of user control elements within the array when the subset of user control elements are assigned to control functionally-linked inputs for the vehicle functions.

2. The user control system of claim 1, wherein the indicator elements are positioned between the user control elements of the array, such that the indicator elements are arranged to display functional links between adjacent user control elements within the array.

3. The user control system of claim 1 or claim 2, wherein the indicator elements comprise illuminating elements, wherein when adjacent user control elements are assigned to control functionally-linked inputs for the vehicle functions, an indicator element extending between the adjacent control elements is illuminated to display the functional link between the user control elements.

4. The user control system of any one of claims 1-3, wherein the indicator elements comprise lights, LEDs, or LCDs.

5. The user control system of any one of claims 1-4, wherein the user control elements are provided with integral indicators, wherein the integral indicators are arranged to display links between functionally-linked control elements.

6. The user control system of claim 5, wherein the integral indicators comprise colour-changing light elements, e.g. lights, LEDS, LCDs, wherein functionally-linked control elements are illuminated in common colours.

7. The user control system of claim 5 or claim 6, wherein the integral indicators comprise programmable display screens, the display screens arranged to display an indication of the controlled vehicle function.

8. The user control system of any one of claims 1-7, wherein the array of assignable user control elements comprises an array of pushbutton switches.

9. The user control system of any one of claims 1-8, further comprising a user interface device, wherein user control elements can be assigned to control different vehicle functions using the user interface device.

10. The user control system of claim 9, wherein the user interface device comprises an operator terminal or touch-screen display.

11. The user control system of any one of claims 1-10, further comprising an electronic control unit (ECU) operable to control the operation of the indicator elements based on the assignment of the user control elements to control different vehicle functions.

12. A vehicle, preferably an agricultural or constructional vehicle, further preferably an agricultural tractor or harvester, the vehicle having a plurality of controllable vehicle functions, the vehicle comprising a user control system as claimed in any one of claims 1-11.

13. The vehicle of claim 12, further comprising a control lever, wherein the user control system is provided on the control lever.

14. The vehicle of claim 13, wherein the user control system is provided on a control panel arranged on the control lever.

15. The vehicle of claim 14, wherein the position of the control panel is adjustable on the control lever.
